# EUROPÄISCHE PATENTSCHRIFT

(11) **EP 2 803 255 B1**
(45) Veröffentlichungstag und Bekanntmachung des Hinweises auf die Patenterteilung: **05.07.2017**
(21) Anmeldenummer: 13002558.8
(22) Anmeldetag: 15.05.2013
(51) Int. Cl.: A01D 34/00, G05D 1/02

(54) **Selbstfahrendes Arbeitsgerät mit Hinderniserkennung**
Self-propelled working device with obstacle detection
Appareil de travail automobile avec détection d'obstacles

(43) Veröffentlichungstag der Anmeldung: 19.11.2014
(73) Patentinhaber: Viking GmbH, 6336 Langkampfen (AT)
(72) Erfinder: Zierl, Gerhard, 6323 Bad Häring (AT); Akdag, Idris, 6300 Wörgl (AT); Schimmele, Stefan, 6330 Kufstein (AT); Schäfer, Frieder, 72149 Neustetten (DE); Hans, Matthias, 83088 Kiefersfelden (DE)
(74) Vertreter: Wasmuth, Rolf

(56) Entgegenhaltungen:
- EP-A1- 2 692 220
- EP-A2- 1 582 957
- EP-A2- 2 687 077
- WO-A1-02/071175
- WO-A1-03/103375
- DE-U1-202009 010 809

## Beschreibung

Die Erfindung betrifft ein selbstfahrendes Arbeitsgerät, insbesondere einen Rasenmäher nach dem Oberbegriff des Anspruchs 1.

Ein derartiges autonom fahrendes Arbeitsgerät ist aus der DE 20 2009 010 809 U1 bekannt. Die Haube ist über aus Schraubenfedern gebildeten Befestigungselementen am Fahrgestell festgelegt und kann in alle Raumrichtungen ausgelenkt werden. Bei einer Auslenkung in der Ebene der Fahrtrichtung des Gerätes werden - je nach Auslenkung - Kontaktkaskaden betätigt, deren Signale eine Information über die Größe der Auslenkung geben. Je nachdem, ob die vordere oder die hintere Kontaktkaskade betätigt ist, kann auf die Richtung eines auftretenden Hindernisses geschlossen werden; fährt der Robotermäher jedoch unter einem flachen Winkel auf ein Hindernis auf, wird die Haube seitlich verschoben, was durch die Kontaktkaskaden nicht erfasst wird.

Aus den nachveröffentlichten europäischen Patentanmeldungen EP 2 692 220 A1 und EP 2 687 077 A2 geht ein autonom fahrender Rasenmäher mit einem Fahrgestell und einer beweglich am Fahrgestell gehaltenen Haube als bekannt hervor. Es sind zwei Hallsensoren angeordnet, die mit einem Dauermagnet zusammenwirken. Das Magnetfeld des Dauermagneten durchsetzt in Ruhelage der Haube die Hallsensoren, derart, dass bei einer Relativbewegung zwischen den Bauteilen eine Änderung des Ausgangssignals der Hallsensoren auftritt, wobei die Ausgangssignale der Hallsensoren in der Steuerung ausgewertet werden. So kann durch Auswertung der Signale eine Relativbewegung zwischen der Haube und dem Fahrgestell erkannt werden.

Der Erfindung liegt die Aufgabe zugrunde, ein bekanntes selbstfahrendes Arbeitsgerät derart weiterzubilden, dass über die Auslenkung der Haube in einfacher Weise nicht nur eine Hinderniserkennung möglich ist, sondern auch ein Anheben der Haube erkannt werden kann.

Die Aufgabe wird erfindungsgemäß nach den Merkmalen des Anspruchs 1 gelöst.

An dem einen Bauteil des Arbeitsgerätes - z. B. dem Fahrgestell - sind mit Abstand zueinander mindestens zwei Hallsensoren angeordnet, die im Magnetfeld zumindest eines Dauermagneten liegen, welcher an dem anderen Bauteil - z. B. der Haube - befestigt ist. In Ruhelage der Haube durchsetzt das Magnetfeld des Dauermagneten die Hallsensoren, so dass diese jeweils ein Ausgangssignal abgeben, z. B. eine Ausgangsspannung. Bei einer Relativbewegung zwischen den Bauteilen verschiebt sich das Magnetfeld z. B. mit der Haube bzw. der Haubenwand, wodurch sich am Ort der Hallsensoren eine Veränderung der Feldstärke des Magnetfeldes ergibt. Die Änderung der Feldstärke des Magnetfeldes am Ort der Hallsensoren aufgrund der Verschiebung ändert das Ausgangssignal jeder der Hallsensoren, wobei die geänderten Ausgangssignale in einer Steuerung ausgewertet werden.

Unabhängig von der Ableitung der x/y-Koordinaten zur Richtungserkennung der Auslenkung der Haube kann über die gleichen Hallsensoren ein Anheben des Arbeitsgerätes an der Haube erkannt werden. Hierzu ist vorgesehen, die Ausgangssignale der Hallsensoren in der Steuerung derart zu verarbeiten, dass ein arithmetischer Mittelwert aus allen Ausgangssignalen gebildet wird. Dieser arithmetische Mittelwert wird mit einem vorgegebenen Schwellwert verglichen, wobei ein Über- oder Unterschreiten des Schwellwertes als Anheben des Arbeitsgerätes an der Haube gewertet wird.

Da zumindest zwei Hallsensoren angeordnet sind und sich bei einer Verlagerung der Haube bzw. einer Haubenwand in der Horizontalen das Magnetfeld relativ zu diesen Hallsensoren verschiebt, werden sich - je nach Richtung der Verschiebung - an den Orten der Hallsensoren unterschiedliche Stärken des Magnetfeldes einstellen. Dies führt zu geänderten Ausgangssignalen an den Hallsensoren, aus denen dann die Information abgeleitet werden kann, in welche Richtung das Magnetfeld und damit die Haube bzw. die Haubenwand gegenüber dem Fahrgestell verschoben wurde und um welchen Betrag. Somit kann durch Auswertung der Ausgangssignale der Sensoren festgestellt werden, aus welcher Richtung das Hindernis kommt.

Jeder der Hallsensoren ist so gestaltet, dass in Abhängigkeit des Weges der Relativbewegung zwischen Haube bzw. einer Haubenwand und Fahrgestell ein sich über den Weg änderndes Ausgangssignal generiert wird. Da sich in Abhängigkeit des Weges der Relativbewegung das Magnetfeld verlagert, wird sich das Ausgangssignal des Hallsensors in Abhängigkeit der Verlagerung des Magnetfeldes ebenfalls ändern.

In einfacher Weise sind der Dauermagnet an der Haube und die Hallsensoren am Fahrgestell befestigt.

In besonderer Ausgestaltung der Erfindung sind drei Hallsensoren auf einem etwa gemeinsamen Kreis angeordnet, wobei die Hallsensoren in Umfangsrichtung des Kreises mit vorzugsweise gleichen Umfangswinkeln voneinander beabstandet liegen. Die Anordnung von drei Sensoren auf einem Kreis gewährleistet eine sichere Erkennung sowohl des Betrages der Auslenkung selbst als auch der Richtung der Auslenkung der Haube bzw. der den Dauermagneten oder die Sensoren tragenden Haubenwand relativ zum Fahrgestell durch Auswertung der Ausgangssignale der mit Abstand zueinander liegenden Hallsensoren. Hierzu werden die Ausgangssignale derart miteinander verknüpft, dass aus den Differenzen der Ausgangssignale untereinander eine aus der Ruhelage erfolgte Verlagerung der Haube in der Horizontalen berechnet werden kann. Dabei werden die Ausgangssignale in ein kartesisches x/y-Koordinatensystem umgerechnet, so dass in der Horizontalen sowohl der Betrag der Auslenkung als auch die Richtung der Auslenkung in einfacher Weise durch die Steuerung abgeleitet werden kann.

Es kann vorteilhaft sein, einem Dauermagneten mehrere mit Abstand zueinander liegende Hallsensoren zuzuordnen. Vorteilhaft wird jedem Hallsensor ein Dauermagnet zugeordnet, wobei sich die Magnetfelder der Dauermagnete überschneiden. Bei einer Verschiebung des Magnetfeldes aufgrund einer Relativbewegung zwischen der Haube und dem Fahrgestell geraten die Hallsensoren in das stärkere Magnetfeld des Überschneidungsbereiches und geben ein größeres Ausgangssignal ab. Dies kann in Arbeitsbereichen mit hoher Störstrahlung vorteilhaft sein.

In weiterer Ausgestaltung der Erfindung liegen die Hallsensoren in einer gemeinsamen Ebene. Dadurch wird erreicht, dass in Ruhelage der Haube relativ zum Fahrgestell alle Hallsensoren ein etwa gleiches Ausgangssignal abgeben und so in einfacher Weise die Funktionsfähigkeit der Hallsensoren geprüft werden kann.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: eine perspektivische Darstellung eines selbstfahrenden Arbeitsgeräts am Beispiel eines Rasenmähers,
- Fig. 2: eine Teildarstellung des Fahrgestells bei abgenommener Haube mit den Befestigungselementen für die Haube,
- Fig. 3: eine schematische Darstellung eines Befestigungselementes zwischen dem Fahrgestell und der Haube des Arbeitsgerätes,
- Fig. 4: eine schematische Darstellung der Anordnung von Hallsensoren zwischen der Haube und dem Fahrgestell,
- Fig. 5: in schematischer Darstellung die beim Anheben der Haube auftretende Relativbewegung zwischen dem Fahrgestell und der Haube,
- Fig. 6: eine schematische Darstellung gemäß Fig. 5 mit mehreren Hallsensoren am Fahrgestell und einem Dauermagneten an der Haube,
- Fig. 7: ein idealisiertes schematisches Diagramm zu den Ausgangssignalen der Hallsensoren bei einer Relativbewegung zwischen Haube und Fahrgestell,
- Fig. 8: eine schematische Darstellung einer Vorrichtung zur Auswertung der Ausgangssignale der Hallsensoren,
- Fig. 9: eine schematische Darstellung nach Fig. 4 mit drei Hallsensoren und einem Dauermagneten zur Richtungserkennung der Relativbewegung zwischen Haube und Fahrgestell,
- Fig. 10: eine schematische Darstellung entsprechend Fig. 9 mit jeweils einem einem Hallsensor zugeordneten Dauermagneten.

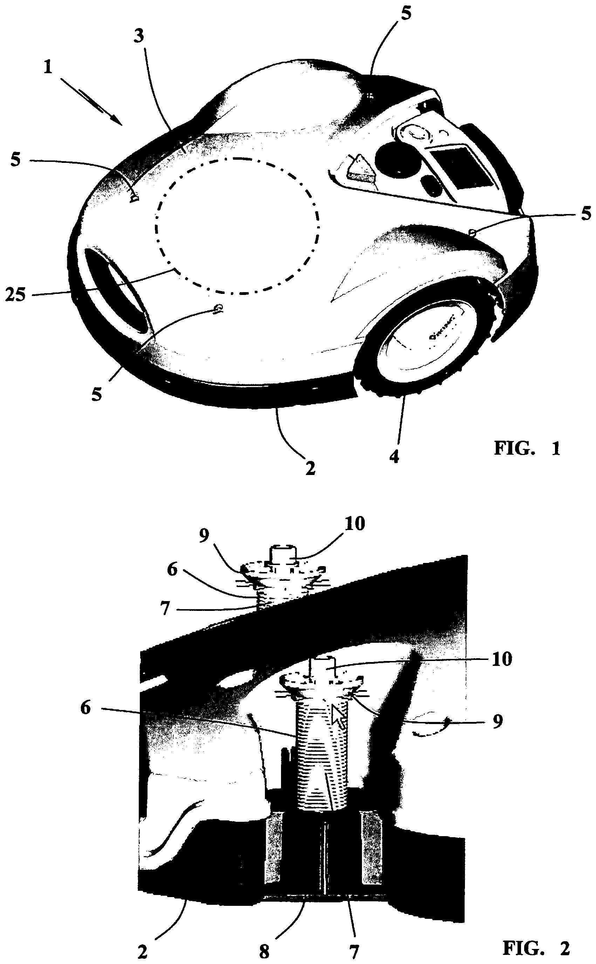

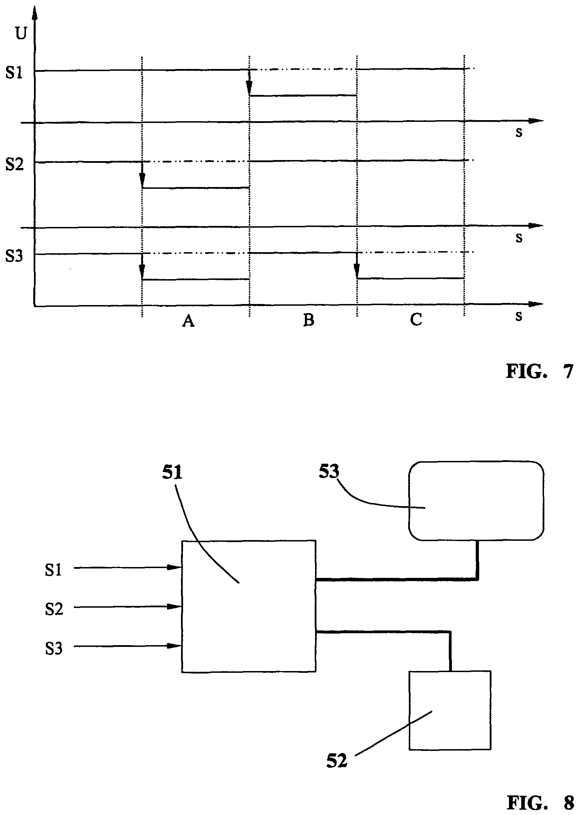

Das in Fig. 1 dargestellte selbstfahrende Arbeitsgerät 1 ist ein autonom fahrender Rasenmäher, insbesondere ein Roboterrasenmäher, der im Wesentlichen aus einem Fahrgestell 2 und einer Haube 3 besteht, die auf dem Fahrgestell 2 angeordnete Geräteeinheiten abdeckt. Geräteeinheiten sind z. B. die in Fig. 8 dargestellte Steuerung 51, ein Antriebsmotor 52 und/oder ein Akkupack 53.

Das Fahrgestell 2 weist zwei Antriebsräder 4 auf, die von einem Antriebsmotor 52 (Fig. 8) nach den Vorgaben einer Steuerung 51 (Fig. 8) angetrieben sind.

Die Haube ist an vier Befestigungspunkten 5 mit dem Fahrgestell 2 verbunden, wozu zwischen dem Fahrgestell 2 und der Haube 3 Befestigungselemente 6 (Fig. 2) angeordnet sind.

Wie Fig. 2 zeigt, besteht ein Befestigungselement 6 aus einer Feder, insbesondere aus einer Schraubenfeder 7, die mit ihrem Fuß in einer zylindrischen Aufnahme 8 des Fahrgestells 2 gehalten ist. Das andere freie Ende der Schraubenfeder 7 trägt einen Stützkörper 9, der einen zylindrischen Zentrierstift 10 aufweist, welcher im Befestigungspunkt 5 die Haube 3 durchragt. Der im Befestigungspunkt 5 aus der Haube 3 hervorstehende Zentrierstift 10 wird mittels eines Doms, Splintes oder dgl. an der Haube gesichert, so dass die Haube 3 unverlierbar mit dem Fahrgestell 2 verbunden ist.

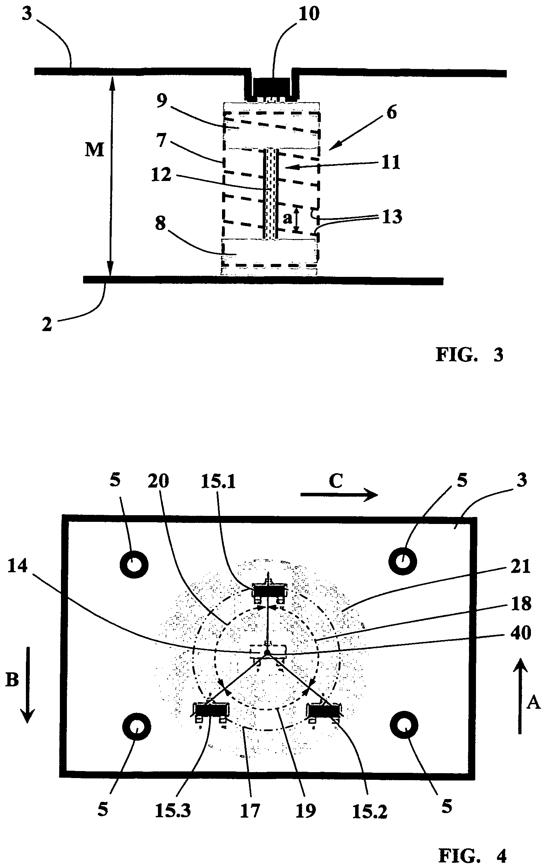

Das nach Art eines Joysticks ausgebildete Befestigungselement 6 ist in Fig. 3 schematisch wiedergegeben. Die Aufnahme 8 ist Teil des Fahrgestells 2, zweckmäßig einteilig mit dem Fahrgestell 2 ausgebildet. Der Stützkörper 9 ist an dem freien Ende der Schraubenfeder 7 gehalten; auf ihm liegt die Haube 3 auf. Der Zentrierstift 10 ist in seiner Lage in der Haube 3 gesichert. Der Zentrierstift 10 kann zweckmäßig auch eine Befestigungsschraube sein.

Zwischen der Aufnahme 8 und dem Stützkörper 9 bzw. dem Zentrierstift 10 ist eine Hubbegrenzung 11 vorgesehen, die den Maximalabstand M zwischen dem Fahrgestell 2 und der Haube 3 begrenzt. Die Hubbegrenzung 11 ist vorzugsweise aus einem biegeschlaffen Seil 12 gebildet, welches als Kunststoffseil, Stahlseil oder dgl. Seil ausgebildet sein kann. Die Länge des Seils 12 gibt den Maximalabstand M zwischen Fahrgestell 2 und Haube 3 vor. Bei diesem Maximalabstand M liegen die Windungen 13 der Schraubenfeder 7 mit Abstand a zueinander. In Ruhelage der Haube 3 liegen die Windungen 13 mit geringem Abstand zueinander, wie dies in Fig. 2 dargestellt ist. Vorzugsweise liegen die Windungen 13 der unbelasteten Schraubenfeder 7 auf Block, d. h. die Schraubenfeder 7 kann axial nicht zusammengedrückt werden.

Aufgrund der joystickartigen Befestigungselemente 6 kann die Haube 5 sowohl seitlich in allen Raumrichtungen in der Horizontalen ausgelenkt als auch relativ zum Fahrgestell 2 angehoben werden, wobei der Maximalabstand M der Haube 3 zum Fahrgestell 2 durch die Hubbegrenzung 11 vorbestimmt ist. Liegen in Ruhelage der Schraubenfeder 7 die Windungen 13 mit geringem Abstand zueinander, kann die Haube 3 als Gesamtheit auch axial niedergedrückt werden; liegen die Windungen 13 der unbelasteten Schraubenfedern 7 auf Block, wird sich bei einem Niederdrücken der Haube 3 in Richtung auf das Fahrgestell 2 die Haube 3 selbst verformen, insbesondere in ihrem Bereich 25 (Fig. 1) elastisch nachgeben, so dass ebenfalls eine Verlagerung der Haubenwand relativ zum Fahrgestell auftritt.

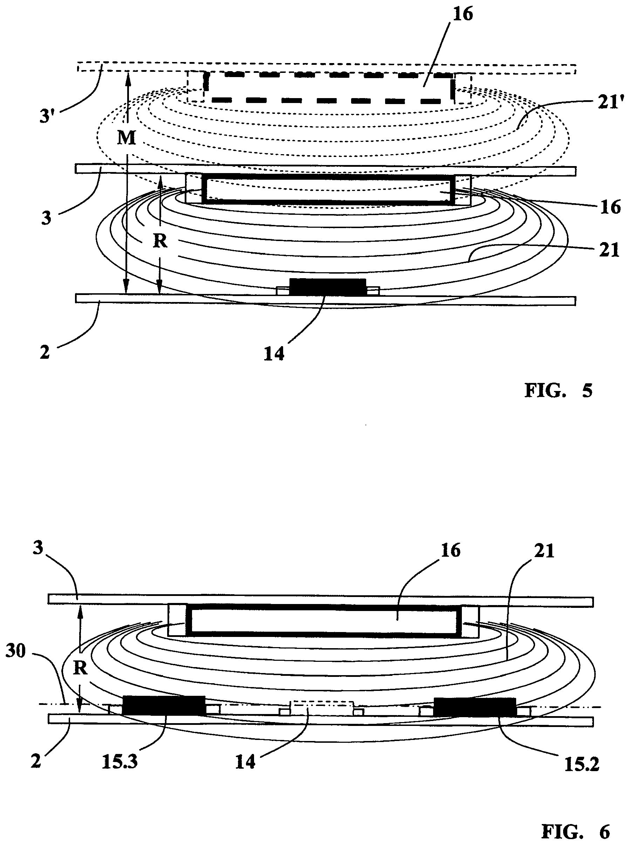

Wie die Figuren 4 bis 6 zeigen, sind im Ausführungsbeispiel am Fahrgestell Sensoren angeordnet. Diese Sensoren sind erfindungsgemäß als Hallsensoren 15.1, 15.2 und 15.3 ausgebildet, die bevorzugt mit einem einzigen, an der Haube 3 befestigten Dauermagneten 16 (Figuren 5, 6) zusammenwirken. Im gezeigten Ausführungsbeispiel sind die Hallsensoren am Fahrgestell 2 und der Dauermagnet 16 an der Haube 3 vorgesehen; eine Anordnung der Sensoren 15.1, 15.2 und 15.3 an der Haube 3 und die Befestigung des Dauermagneten 16 am Fahrgestell kann ebenfalls zweckmäßig sein.

Am Fahrgestell 2 sind mindestens zwei Hallsensoren 15.1, 15.2, 15.3 angeordnet, die mit Abstand zueinander liegen. Im gezeigten Ausführungsbeispiel nach Fig. 4 sind drei Hallsensoren 15.1, 15.2, 15.3 vorgesehen, die zweckmäßig auf einem gemeinsamen Kreis 17 mit Abstand zueinander in einer vorzugsweise gemeinsamen Ebene 30 liegen. Wie Fig. 4 zeigt, liegen die Sensoren 15 mit einem Umfangswinkel 18, 19, 20 zueinander, wobei der Umfangswinkel 18, 19, 20 zwischen den Sensoren 15 bevorzugt gleich ist, bei drei angeordneten Sensoren somit 120° Umfangswinkel beträgt.

Im Ausführungsbeispiel nach Fig. 4 ist optional ein vierter Sensor als zentraler Hallsensor 14 vorgesehen, der vorteilhaft im Zentrum des Kreises 17 angeordnet ist. Der zentrale Hallsensor 14 kann ergänzend für die Erkennung eines Anhebens des Arbeitsgerätes 1 an der Haube 3 ausgewertet werden. Dies ist schematisch in Fig. 5 dargestellt.

Der zentrale Hallsensor 14 ist auf dem Fahrgestell 2 befestigt; oberhalb des zentralen Hallsensors 14 ist ein Dauermagnet 16 an der Haube 3 festgelegt. In der in Fig. 5 gezeigten Ruhelage der Haube 3 durchsetzt das Magnetfeld 21 des Dauermagneten 16 den Hallsensor 14, der entsprechend der Feldstärke des Magnetfeldes 21 am Ort des Hallsensors 14 ein elektrisches Ausgangssignal abgibt, z. B. eine Spannung.

Wird das Arbeitsgerät an der Haube 3 hochgehoben, wird sich die Haube 3 relativ zum Fahrgestell 2 bewegen und einen Hub ausführen, der durch die Hubbegrenzung 11 begrenzt ist. Der Maximalabstand M der in Fig. 5 strichliert dargestellten angehobenen Haube 3' ist durch die Länge des Seils 12 vorgegeben.

Da der Dauermagnet 16 mit der angehobenen Haube 3' seine Lage gegenüber dem ortsfesten Hallsensor 14 verändert hat, hat sich auch das Magnetfeld 21' am Ort des zentralen Hallsensors 14 geändert. Der Hallsensor 14 liegt bei angehobener Haube 3' nur noch im Randbereich des Magnetfeldes 21', also in einem Bereich geringerer Feldstärke. Dadurch sinkt das Ausgangssignal des Hallsensors 14, d. h., eine an seinen Anschlüssen abgegriffene Spannung wird kleiner. Das kleiner werdende Ausgangssignal des zentralen Hallsensors 14 kann für die Erkennung des Anhebens des Arbeitsgerätes 1 an der Haube 3 ausgewertet werden, z. B. durch Vergleich mit einem vorgegebenen minimalen Schwellwert. Wird der Schwellwert unterschritten, zeigt dies ein Anheben des Arbeitsgerätes an der Haube an, und es kann z. B. der Fahrantrieb und/oder der Antrieb für das Werkzeug stillgesetzt werden.

In entsprechender Weise kann ein Niederdrücken der Haube 3 detektiert werden, z. B. wenn sich ein Kind auf die Haube setzt und eine Haubenwand z. B. den Bereich 25 (Fig. 1) in Richtung auf das Fahrgestell verlagert. In der Ruhelage hat die Haubenwand einen Abstand R zum Fahrgestell 2. Wird die Haubenwand niedergedrückt, verringert sich der Abstand R, und der Dauermagnet 16 liegt näher am Hallsensor 14. Damit wirkt am Ort des Hallsensors 14 eine höhere Feldstärke, da das Magnetfeld 21 nicht homogen ist. Nahe dem Dauermagneten ist die Feldstärke größer als in einer Entfernung vom Dauermagneten. Der Hallsensor gibt daher beim Niederdrücken der Haube 3 bzw. der Haubenwand ein größeres Ausgangssignal ab, das - wird z. B. ein vorgegebener maximaler Schwellwert überschritten - zum Abschalten des Fahrantriebs und/oder des Werkzeugantriebs ausgewertet werden kann.

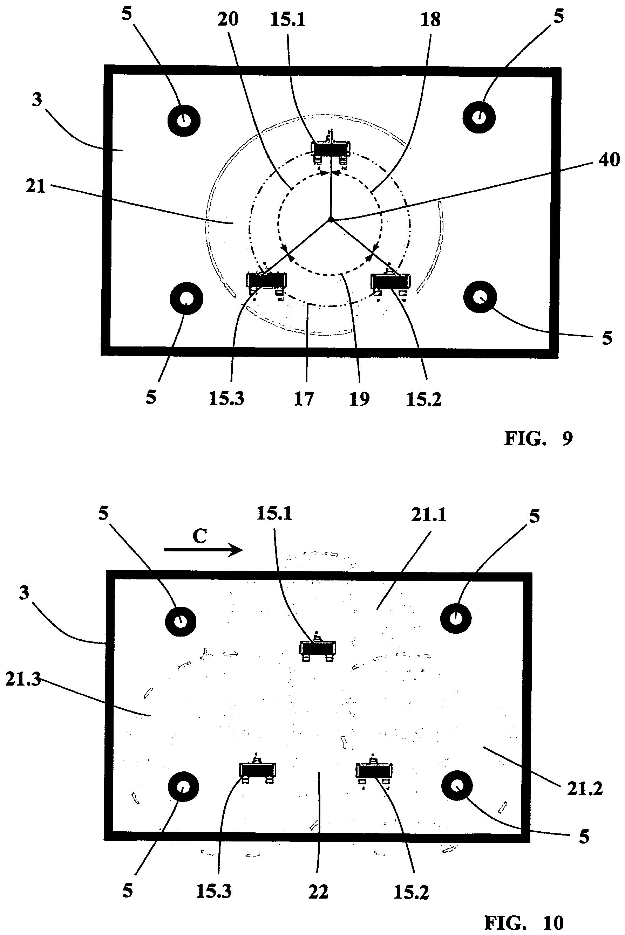

Wie die Figuren 4 und 6 zeigen, durchsetzt das Magnetfeld 21 des Dauermagneten 16, der insbesondere ein Stabmagnet ist, mehrere Hallsensoren 15.1, 15.2, 15.3, insbesondere alle Hallsensoren 15.1, 15.2, 15.3 der Anordnung gemäß Fig. 4 bzw. Fig.9.

Ausgehend von der Darstellung nach Fig. 4 oder Fig. 9 sind in Fig. 7 in vereinfachter Darstellung und schematisch die Ausgangssignale S1, S2 und S3 der auf dem Kreis 17 angeordneten Sensoren 15 wiedergegeben. Jeder der Hallsensoren 15.1, 15.2, 15.3 der gezeigten Anordnung gibt in Abhängigkeit des an seinem Montageort herrschenden Magnetfeldes 21 ein Spannungssignal als Ausgangssignal S1, S2, S3 ab. Liegt die Haube 3 in Ruhelage gemäß den Darstellungen in den Figuren 5 und 6, wird ein Ausgangssignal S1, S2, S3, d. h., ein Spannungssignal entsprechend dem am Ort des Hallsensors 15.1, 15.2, 15.3 wirkenden Magnetfeld gemessen werden.

Die Anordnung von mehreren mit Abstand zueinander liegenden Hallsensoren, insbesondere die sternförmige Anordnung von drei Hallsensoren auf einem Kreis 17 gemäß der Darstellung in Fig. 4 oder Fig. 9 gibt die Möglichkeit zu erkennen, um welchen Betrag und in welche Richtung A, B oder C die Haube 3 relativ zu den am Fahrgestell 2 festliegenden Hallsensoren 15.1, 15.2, 15.3 ausgelenkt wurde.

In der vereinfachten Darstellung in Fig. 7 ist schematisch wiedergegeben, dass alle drei Hallsensoren in Ruhelage der Haube 3 zunächst ein im Wesentlichen konstantes Ausgangssignal S1, S2 und S3 abgeben. Wird nun die Haube 3 in Pfeilrichtung A verschoben, geraten die Sensoren 15.2 und 15.3 in den Randbereich des Magnetfeldes 21, da sich dieses mit der Haube 3 relativ zum Fahrgestell 2 verlagert. Im Randbereich des Magnetfeldes 21 herrscht eine geringere Felddichte, weshalb die Ausgangssignale S2 und S3 der Sensoren 15.2 und 15.3 kleiner werden, während das Ausgangssignal S1 des Sensors 15.1 gleich bleibt oder steigt. Dieses ist - vereinfacht idealisiert - in Fig. 7 im Abschnitt A schematisch wiedergegeben.

Wird hingegen die Haube 3 mit dem Magnetfeld 21 in Pfeilrichtung B ausgelenkt, verbleiben die Sensoren 15.2 und 15.3 im Wesentlichen im Magnetfeld 21, so dass deren Ausgangssignale S2 und S3 gleich bleiben oder leicht größer werden. Bei einer Verschiebung der Haube 3 in Pfeilrichtung B verlagert sich das Magnetfeld 21 derart, dass der Sensor 15.1 in dem Randbereich des Magnetfeldes 21 zu liegen kommt oder gar aus dem Magnetfeld austritt, weswegen das Ausgangssignal S1 des Sensors 15.1 kleiner wird, wie idealisiert und vereinfacht im Abschnitt B in Fig. 7 wiedergegeben ist.

Wird die Haube in Pfeilrichtung C (Fig. 4) ausgelenkt, wird der Sensor 15.3 in dem Randbereich des Magnetfeldes 21 zu liegen kommen und daher sein Ausgangssignal S3 kleiner werden. Die Ausgangssignale S1 und S2 der Sensoren 15.1 und 15.2 bleiben im Wesentlichen gleich, wie in dem idealisierten vereinfachten Diagramm in Fig. 7 unter Abschnitt C wiedergegeben ist.

In einer besonders bevorzugten Ausführungsform werden die Ausgangssignale S1, S2 und S3 der Hallsensoren 15.1, 15.2, 15.3 der Steuerung 51 des Arbeitsgerätes 1 zugeführt und miteinander derart verknüpft, dass anhand der Änderungen und Zustände der Ausgangssignale S1, S2 und S3 von der Steuerung berechnet werden kann, in welche Richtung A, B oder C - oder eine andere Richtung - die Haube 3 ausgelenkt wurde. Hierzu werden die Ausgangssignale S1, S2 und S3 derart verarbeitet, dass aus den Beträgen und Differenzen der Ausgangssignale S1, S2 und S3 untereinander eine aus der Ruhelage erfolgte Verlagerung der Haube 3 in der Horizontalen berechnet werden kann. Dabei werden die Ausgangssignale S1, S2 und S3 in ein kartesisches x/y-Koordinatensystem umgerechnet, so dass in der Horizontalen sowohl der Betrag der relativen Auslenkung zum Fahrgestell 2 als auch die Richtung der Auslenkung in einfacher Weise durch die Steuerung 51 abgeleitet und weiterverarbeitet werden kann. Somit kann nicht nur der Betrag bzw. Weg der Auslenkung der Haube 3 relativ zum Fahrgestell 2 erkannt werden, sondern auch die Richtung, in die die Haube 3 ausgelenkt wurde. Es kann somit das Hindernis und die Richtung, aus der das Hindernis kommt, in einfacher Weise erkannt werden.

Da das Ausgangssignal eines Hallsensors ein von dem Betrag bzw. dem Weg der Auslenkung abhängiges, insbesondere proportionales Signal abgibt, kann mit der Auswertung der Signale in der Steuerung 51 nicht nur die Richtung der Auslenkung erkannt, sondern auch dessen Betrag ermittelt werden.

Unabhängig von der Ableitung der x/y-Koordinaten zur Richtungserkennung der Auslenkung der Haube 3 in der Horizontalen kann über die gleichen Hallsensoren 15.1, 15.2, 15.3 ein Anheben des Arbeitsgerätes 1 an der Haube 3 erkannt werden. Hierzu ist vorgesehen, die Ausgangssignale S1, S2 und S3 der Hallsensoren 15.1, 15.2, 15.3 in der Steuerung 51 derart zu verarbeiten, dass ein arithmetischer Mittelwert aus allen Ausgangssignalen S1, S2 und S3 gebildet wird. Dieser arithmetische Mittelwert wird mit einem vorgegebenen minimalen Schwellwert verglichen, wobei ein Unterschreiten des minimalen Schwellwertes als Anheben des Arbeitsgerätes 1 an der Haube 3 gewertet wird. Wird der Schwellwert unterschritten, bewirkt die Steuerung 51 ein Abschalten z. B. des Fahrantriebs und/oder des Werkzeugantriebs.

In entsprechender Weise kann ein Niederdrücken der Haube 3 bzw. eine elastische Verformung der Haubenwand detektiert werden. In der Ruhelage der Haube 3 bzw. der Haubenwand werden die Hallsensoren 15.1, 15.2, 15.3 von dem Magnetfeld eines vorzugsweise gemeinsamen Dauermagneten 16 durchsetzt und geben entsprechende Ausgangssignale S1, S2 und S3 ab. Diese werden in der Steuerung arithmetisch gemittelt und mit einem vorgegebenen maximalen Schwellwert verglichen. Wird der vorgegebene maximale Schwellwert überschritten, ist dies ein Indikator für das Niederdrücken der Haube 3 bzw. der Haubenwand, z. B. weil sich ein Kind darauf gesetzt hat. Wird der Schwellwert überschritten, bewirkt die Steuerung 51 ein Abschalten z. B. des Fahrantriebs und/oder des Werkzeugantriebs.

Es ist somit ausreichend, lediglich drei mit Abstand zueinander liegende Sensoren 15.1 bis 15.3 vorzusehen, die beim Hochheben des Arbeitsgerätes 1 an der Haube 3 bzw. bei einer Verlagerung der Haube 3 bzw. einer Haubenwand in Richtung auf das Fahrgestell jeweils ein geändertes Ausgangssignal abgeben. Die Steuerung 51 kann - wird der arithmetische Mittelwert aller drei Ausgangssignale S1, S2 und S3 kleiner - das Hochheben des Arbeitsgerätes 1 an der Haube 3 in einfacher Weise erkennen und den Antriebsmotor bzw. das Werkzeug abschalten. Entsprechend kann so - wird der arithmetische Mittelwert aller drei Ausgangssignale S1, S2 und S3 größer - das Niederdrücken der Haube 3 relativ zum Fahrgestell 2 detektiert werden.

Es kann vorteilhaft sein, jedem Hallsensor 15.1, 15.2 und 15.3 einen Dauermagneten zuzuordnen, so dass - wie Fig. 10 zeigt - drei Magnetfelder 21.1, 21.2 und 21.3 ausgebildet sind. Die Anordnung ist dabei so getroffen, dass in Ruhelage der Haube 3 ein einzelner Hallsensor 15.1, 15.2 und 15.3 im Wesentlichen nur in einem Magnetfeld 21.1,21.2,21.3 eines zugeordneten Dauermagneten liegt. Diese Anordnung führt dazu, dass bei einem Verschieben der Haube 3 relativ zum Fahrgestell 2 z. B. in Pfeilrichtung C der Sensor 15.2 in den Überdeckungsbereich 22 der beiden Magnetfelder 21.2 und 21.3 zu liegen kommt, so dass die magnetische Feldstärke am Ort des Hallsensors 15.2 größer ist als vor der Verschiebung. Dies führt dazu, dass das Ausgangssignal S2 des Hallsensors 15.2 größer wird, also ein größeres Ausgangssignal abgegeben wird. Insbesondere in Umgebungen mit hoher Störstrahlung kann so sicher die Auslenkung der Haube 3 und die Richtung der Auslenkung erkannt werden.

Die am Fahrgestell 2 festgelegten Hallsensoren 15.1, 15.2 und 15.3 liegen bevorzugt in einer gemeinsamen Ebene, wobei oberhalb des Zentrums 40 der Hallsensoren 15.1, 15.2 und 15.3 an der Haube 3 der Dauermagnet 16 befestigt ist. Der Dauermagnet 16 ist bevorzugt ein Ringmagnet, der in einer zur Ebene 30 der Sensoren etwa parallelen Ebene liegt. In Ruhelage der Haube 3 herrscht dabei an den Orten der Sensoren im Wesentlichen eine gleiche Feldstärke vor; dadurch sind in Ruhelage der Haube 3 die Ausgangssignale S1, S2 und S3 der Sensoren 15.1, 15.2 und 15.3etwa gleich. Der Dauermagnet 16 ist zweckmäßig in einem Bereich 25 der Haube 3 oberhalb des Zentrums 40 vorgesehen (Fig. 1). Der Bereich 25 ist ein etwa mittiger Bereich der Haube 3.

## Patentansprüche

1. Selbstfahrendes Arbeitsgerät, insbesondere Rasenmäher,
• mit einem Fahrgestell (2) als erstes Bauteil und einer am Fahrgestell (2) gehaltenen Haube (3) als zweites Bauteil,
• wobei die Haube (3) auf dem Fahrgestell (2) angeordnete Geräteeinheiten abdeckt,
• und die Haube (3) über Befestigungselemente (6) beweglich am Fahrgestell (2) gehalten ist,
• und mit einem Sensor (14, 15.1, 15.2, 15.3), der eine Relativbewegung zwischen der Haube (3) und dem Fahrgestell (2) überwacht und ein Ausgangssignal (S1, S2, S3) an eine Steuerung (S1) abgibt,
• wobei an dem einen Bauteil mit Abstand zueinander mindestens zwei Hallsensoren (15.1, 15.2, 15.3) angeordnet sind und an dem anderen Bauteil ein Dauermagnet (16) befestigt ist,
• wobei das Magnetfeld (21) des Dauermagneten (16) in Ruhelage der Haube (3) die Hallsensoren (15.1, 15.2, 15.3) durchsetzt, derart, dass bei einer Relativbewegung zwischen den Bauteilen eine Änderung des Ausgangssignals (S1, S2, S3) der Hallsensoren (15.1, 15.2, 15.3) auftritt,
• und die Ausgangssignale (S1, S2, S3) der Hallsensoren (15.1, 15.2, 15.3) in der Steuerung (51) ausgewertet werden,
**dadurch gekennzeichnet,**
• **dass** aus den Ausgangssignalen (S1, S2, S3) der Hallsensoren (15.1, 15.2, 15.3) in der Steuerung (51) ein arithmetischer Mittelwert gebildet wird,
• und der Mittelwert mit einem vorgegebenen Schwellwert verglichen wird.

2. Arbeitsgerät nach Anspruch 1,
**dadurch gekennzeichnet, dass** der Hallsensor (15.1, 15.2, 15.3) in Abhängigkeit des Weges der Relativbewegung zwischen einer Haubenwand und dem Fahrgestell (2) ein sich über den Weg änderndes Ausgangssignal (S1, S2, S3) abgibt.

3. Arbeitsgerät nach Anspruch 1 oder 2,
**dadurch gekennzeichnet, dass** der Dauermagnet (16) an der Haubenwand und die Hallsensoren (15.1, 15.2, 15.3) am Fahrgestell (2) befestigt sind.

4. Arbeitsgerät nach einem der Ansprüche 1 bis 3,
**dadurch gekennzeichnet, dass** drei Hallsensoren (15.1, 15.2, 15.3) auf einem etwa gemeinsamen Kreis (17) liegen, wobei die Hallsensoren (15.1, 15.2, 15.3) mit vorzugsweise gleichen Umfangswinkeln (18, 19, 20) voneinander beabstandet sind.

5. Arbeitsgerät nach einem der Ansprüche 1 bis 4,
**dadurch gekennzeichnet, dass** die Ausgangssignale (S1, S2, S3) der Hallsensoren (15.1, 15.2, 15.3) in der Steuerung (51) miteinander verknüpft werden und für eine Richtungserkennung der Relativbewegung in mindestens zwei Richtungen eines kartesischen Koordinatensystems ausgewertet werden.

6. Arbeitsgerät nach Anspruch 1,
**dadurch gekennzeichnet, dass** ein Unterschreiten des Schwellwertes ein Anheben des Arbeitsgerätes (1) an der Haube (3) anzeigt.

7. Arbeitsgerät nach einem der Ansprüche 1 bis 6,
**dadurch gekennzeichnet, dass** einem Dauermagneten (16) mehrere mit Abstand zueinander liegende Hallsensoren (15.1, 15.2, 15.3) zugeordnet sind.

8. Arbeitsgerät nach einem der Ansprüche 1 bis 6,
**dadurch gekennzeichnet, dass** jedem Hallsensor (15.1, 15.2, 15.3) ein Dauermagnet (16) zugeordnet ist.

9. Arbeitsgerät nach einem der Ansprüche 1 bis 8,
**dadurch gekennzeichnet, dass** die Hallsensoren (15.1, 15.2, 15.3) in einer gemeinsamen Ebene (30) liegen.

## Claims

1. Self-propelled working implement, in particular lawnmower, comprising
- a chassis (2) as a first component and a hood (3) held on the chassis (2) as a second component,
- wherein the hood (2) covers implement units located on the chassis (2),
- and the hood (3) is movably held on the chassis (2) by way of fasteners (6),
- and further comprising a sensor (14, 15.1, 15.2, 15.3), which monitors a relative movement between the hood (3) and the chassis (2) and outputs an output signal (S1, S2, S3) to a control unit (51),
- wherein at least two Hall sensors (15.1, 15.2, 15.3) are located at a distance from one another on the one component and a permanent magnet (16) is secured to the other component,
- wherein the magnetic field (21) of the permanent magnet (16) passes through the Hall sensors (15.1, 15.2, 15.3) in the rest position of the hood (3) in such a way that the output signal (S1, S2, S3) of the Hall sensors (15.1, 15.2, 15.3) changes at a relative movement between the components,
- and the output signals (S1, S2, S3) of the Hall sensors (15.1, 15.2, 15.3) are evaluated in the control unit (51),
**characterised in that**
- an arithmetic mean value is formed in the control unit (51) from the output signals (S1, S2, S3) of the Hall sensors (15.1, 15.2, 15.3),
- and the mean value is compared to a preset threshold value.

2. Working implement according to claim 1,
**characterised in that** Hall sensor (15.1, 15.2, 15.3) outputs an output signal (S1, S2, S3) which changes along the travel as a function of the travel of the relative movement between a hood wall and the chassis (2).

3. Working implement according to claim 1 or 2,
**characterised in that** the permanent magnet (16) is secured to the hood wall and the Hall sensors (15.1, 15.2, 15.3) are secured to the chassis (2).

4. Working implement according to any of claims 1 to 3,
**characterised in that** three Hall sensors (15.1, 15.2, 15.3) lie on an approximately common circle (17), the Hall sensors (15.1, 15.2, 15.3) being spaced from one another at preferably equal angles at circumference (18, 19, 20).

5. Working implement according to any of claims 1 to 4,
**characterised in that** the output signals (S1, S2, S3) of the Hall sensors (15.1, 15.2, 15.3) are interlinked in the control unit (51) and evaluated in at least two directions of a Cartesian coordinate system for a direction detection.

6. Working implement according to claim 1,
**characterised in that** an undershooting of the threshold value indicates a raising of the working implement (1) at the hood (3).

7. Working implement according to any of claims 1 to 6,
**characterised in that** several Hall sensors (15.1, 15.2, 15.3) spaced from one another are assigned to a permanent magnet (16).

8. Working implement according to any of claims 1 to 6,
**characterised in that** a permanent magnet (16) is assigned to each Hall sensor (15.1, 15.2, 15.3).

9. Working implement according to any of claims 1 to 8,
**characterised in that** the Hall sensors (15.1, 15.2, 15.3) lie in a common plane (30).

## Revendications

1. Equipement de travail automoteur, en particulier tondeuse à gazon,
• avec un châssis roulant (2), comme premier composant, et un capot (3) fixé au châssis roulant (2), comme deuxième composant,
• le capot (3) couvrant des unités d'équipement disposées sur le châssis roulant (2),
• et le capot (3) étant fixé, mobile, au châssis roulant (2) par l'intermédiaire d'éléments de fixation (6),
• et avec un capteur (14, 15.1, 15.2, 15.3) qui surveille un mouvement relatif entre le capot (3) et le châssis roulant (2) et envoie un signal de sortie (S1, S2, S3) à une commande (51),
• au moins deux capteurs à effet Hall (15.1, 15.2, 15.3) espacés l'un de l'autre étant disposés sur un composant, et un aimant permanent (16) étant fixé à l'autre composant,
• le champ magnétique (21) de l'aimant permanent (16), dans la position de repos du capot (3), traversant les capteurs à effet Hall (15.1, 15.2, 15.3), de sorte que lors d'un mouvement relatif entre les composants, une variation du signal de sortie (S1, S2, S3) des capteurs à effet Hall (15.1, 15.2, 15.3) se produit,
• et les signaux de sortie (S1, S2, S3) des capteurs à effet Hall (15.1, 15.2, 15.3) étant analysés dans la commande (51),
**caractérisé**
• **en ce qu'**une valeur moyenne arithmétique est formée dans la commande (51) à partir des signaux de sortie (S1, S2, S3) des capteurs à effet Hall (15.1, 15.2, 15.3),
• et ladite valeur moyenne est comparée à une valeur seuil prédéfinie.

2. Equipement de travail selon la revendication 1,
**caractérisé en ce que** le capteur à effet Hall (15.1, 15.2, 15.3), en fonction de la course du mouvement relatif entre une paroi de capot et le châssis roulant (2), envoie un signal de sortie (S1, S2, S3) qui varie sur ladite course.

3. Equipement de travail selon la revendication 1 ou 2,
**caractérisé en ce que** l'aimant permanent (16) est fixé à la paroi de capot, et les capteurs à effet Hall (15.1, 15.2, 15.3) au châssis roulant (2).

4. Equipement de travail selon l'une des revendications 1 à 3,
**caractérisé en ce que** trois capteurs à effet Hall (15.1, 15.2, 15.3) sont situés sur un cercle (17) à peu près commun, les capteurs à effet Hall (15.1, 15.2, 15.3) étant espacés les uns des autres avec des angles circonférentiels (18, 19, 20) de préférence égaux.

5. Equipement de travail selon l'une des revendications 1 à 4,
**caractérisé en ce que** les signaux de sortie (S1, S2, S3) des capteurs à effet Hall (15.1, 15.2, 15.3) sont combinés dans la commande (51) et sont analysés pour une détection de direction du mouvement relatif dans au moins deux directions d'un système de coordonnées cartésien.

6. Equipement de travail selon la revendication 1,
**caractérisé en ce qu'**une valeur inférieure à la valeur seuil indique un soulèvement de l'équipement de travail (1) au niveau du capot (3).

7. Equipement de travail selon l'une des revendications 1 à 6,
**caractérisé en ce que** plusieurs capteurs à effet Hall (15.1, 15.2, 15.3) espacés les uns des autres sont associés à un aimant permanent (16).

8. Equipement de travail selon l'une des revendications 1 à 6,
**caractérisé en ce qu'**un aimant permanent (16) est associé à chaque capteur à effet Hall (15.1, 15.2, 15.3).

9. Equipement de travail selon l'une des revendications 1 à 8,
**caractérisé en ce que** les capteurs à effet Hall (15.1, 15.2, 15.3) sont situés dans un plan commun (30).
